(19) Europäisches Patentamt / European Patent Office / Office européen des brevets

(11) **EP 3 205 495 B1**

(12) **EUROPEAN PATENT SPECIFICATION**

(45) Date of publication and mention
of the grant of the patent:
**29.01.2020 Bulletin 2020/05**

(51) Int Cl.:
***B32B 15/09*** (2006.01)     ***B65D 1/00*** (2006.01)
***B65D 1/12*** (2006.01)     ***C09D 167/02*** (2006.01)

(21) Application number: **15848234.9**

(22) Date of filing: **05.10.2015**

(86) International application number:
**PCT/JP2015/078201**

(87) International publication number:
**WO 2016/056509 (14.04.2016 Gazette 2016/15)**

(54) **ORGANIC RESIN-COATED COATED METAL PLATE, AND CAN BODY AND CAN LID COMPRISING SAME**

MIT EINEM ORGANISCHEN HARZ BESCHICHTETES METALLBLECH SOWIE DOSENKÖRPER UND DOSENDECKEL DAMIT

PLAQUE MÉTALLIQUE REVÊTUE DE RÉSINE ORGANIQUE ET CORPS DE BOÎTE MÉTALLIQUE ET COUVERCLE DE BOÎTE MÉTALLIQUE COMPRENANT CELLE-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.10.2014 JP 2014205842**

(43) Date of publication of application:
**16.08.2017 Bulletin 2017/33**

(73) Proprietor: **Toyo Seikan Group Holdings, Ltd.**
**Shinagawa-ku**
**Tokyo 141-8627 (JP)**

(72) Inventors:
• **KASHIWAKURA, Takuya**
**Yokohama-shi**
**Kanagawa 240-0062 (JP)**
• **FUNAGI, Yuji**
**Yokohama-shi**
**Kanagawa 240-0062 (JP)**
• **MIYAI, Tomohiro**
**Yokohama-shi**
**Kanagawa 240-0062 (JP)**

(74) Representative: **J A Kemp LLP**
**14 South Square**
**Gray's Inn**
**London WC1R 5JJ (GB)**

(56) References cited:
WO-A1-2013/180067     JP-A- 2000 178 416
JP-A- 2000 204 341     JP-A- 2003 246 006
JP-A- 2006 143 891     JP-A- 2007 302 786
JP-A- 2011 012 265     JP-A- 2012 025 131
JP-A- 2015 003 450     JP-A- 2015 168 760
US-A1- 2014 227 529

**Description**

Technical Field:

This invention relates to a coated metal sheet which is, further, covered with an organic resin for use in the production of cans. More specifically, the invention relates to a coated metal sheet which is, further, covered with an organic resin, and is very applicable for producing cans, is capable of providing cans and can lids that have excellent dent resistance to cope with acid beverages, and is advantageous in economy, too.

Background Art:

Organic resin-covered metal sheets obtained by covering metal sheets such as of aluminum with an organic resin have long been known as materials for producing cans. It has also been known to subject the above metal sheets to the draw working or the draw· ironing working to produce seamless cans for being filled with beverages, or to subject the metal sheets to the press-forming to produce can lids such as easy-to-open ends. For example, an organic resin-covered metal sheet having, as an organic resin layer, a thermoplastic resin film made of a polyester resin containing ethylene terephthalate as a main constituent unit, has been widely used as a material for producing seamless cans (patent document 1).

The seamless cans made from the organic resin-covered metal sheet (seamless cans covered with the organic resin) are often subjected to a severe working such as draw-ironing or draw-redrawing. In the step of heat treatment (heat set) conducted after the can walls have been formed to relax the strain in the organic resin layer caused by the working, therefore, the organic resin layer is often peeled at the can opening (flange-forming portion), hindering the subsequent step of necking or flanging and, depriving the organic resin-covered metal sheet of applicability for producing cans. Therefore, the seamless cans made from the organic resin-covered metal sheet must meet excellent applicability for producing cans without permitting the organic resin layer to peel off in the step of heat treatment after the can walls have been formed.

However, if a seamless can made from the organic resin-covered metal sheet happens to be fallen and receives an external shock (dented) after it has been filled with a content and sealed, it occurs that not only the metal material at the dented portion is deformed but also the organic resin layer that is covering the metal sheet is often cracked due to the shock and deformation of the metal material. The cracked portion of the organic resin layer could trigger corrosion. In case the content filled therein is a strongly corrosive acid beverage, therefore, the can body is subject to be pierced with holes due to corrosion. It is, therefore, important that the can body is not corroded despite it is fallen and is dented or receives a shock. This property is called dent resistance and has recently been demanded to be attained to a level to excellently cope with even highly corrosive contents.

Here, when it comes to a metal sheet used as the organic resin-covered metal sheet for producing cans, there has, usually, been used a surface-treated metal obtained by surface treatment such as chemical conversion treatment in order to improve corrosion resistance and to maintain adhesiveness to the organic resin layer. As such a surface treatment, there has been known, for example, chromic phosphate treatment. The surface-treated metal sheet covered with the organic resin and produced from a chromic phosphate-treated metal sheet has been widely used since it can be excellently applied to producing cans and is capable of providing seamless cans. The above treatment, however, is a treatment that uses a harmful chromium compound. Therefore, it has been urged to employ a surface treatment without using chromium from the standpoint of protecting the environment. Besides, the surface treatment film formed by the chromic phosphate treatment is a hard inorganic film which is easily cracked if it is subjected to the formation working or if it receives external shocks. This surface treatment film, therefore, involves problems in regard to property for following up the work and shock resistance. Therefore, the seamless can that satisfies the dent resistance could not be obtained even with the use of the surface-treated metal sheet covered with the organic resin and produced from a chromic phosphate-treated metal sheet.

Further, there have heretofore been proposed many surface treatment techniques without using chromium for producing cans. For producing seamless aluminum cans, for instance, there has been proposed an organic/inorganic composite chemical conversion treatment using a zirconium compound, a phosphorus compound and a phenol resin (patent document 2).

Despite of using the surface-treated metal sheet treated for its surfaces by the above-mentioned chromium-free treatment, there was not obtained a seamless can covered with the organic resin that satisfies the dent resistance.

On the other hand, there has been proposed an art of using, as organic resin layers, special thermoplastic resin films using a polyester resin containing an ionomer and a polyester resin containing a dimer acid (patent documents 3 and 4). The seamless cans using such special thermoplastic resin films as organic resin layers are capable of exhibiting excellent dent resistance. However, the polyester resins containing the ionomer, dimer acid, etc. are expensive, and are economically inefficient if they are used for general seamless cans.

As a method of improving corrosion resistance and adhesiveness of the metal plate covered with the organic resin, further, there has been proposed an art of forming a primer coating film on a metal material as an underlying layer for an organic resin layer (patent document 5).

However, this art has been proposed for can lids such as easy-open ends made from an organic resin-covered metal sheet, and is not capable of attaining satisfactory dent resistance or is not applicable for producing cans if it is used to produce the seamless cans that are to be subjected to more severe working conditions.

WO 2013/180067 is concerned with a polyester coating composition that comprises a polyester resin (A) with an acid value of 2 to 50 mgKOH/g and a glass transition temperature (Tg) of 35 to 100°C, and a polyester resin (B) with an acid value of 0 to 50mgKOH/g and a glass transition temperature (Tg) of -20 to 25°C, and its use in used in film formation on metal surfaces.

US 2014/227529 is concerned with a resin-coated metal sheet for containers that includes a resin coating layer (A) having a multilayered structure mainly composed of a polyester resin on at least one surface thereof. The resin coating layer (A) includes a resin layer (a1) that contains (i) a polyester resin, (ii) a phenolic resin, (iii) a metal alkoxide compound and/or a metal chelate compound, (iv) an epoxy resin, and (v) at least one selected from the group consisting of polyamine resins, polyamidoamine resins, and polyamide resins.

JP 2006 143891 is concerned with a resin composition for can-coating that comprises (A) a polyester produced from at least an aromatic dicarboxylic acid and 2-ethyl-2-butyl-1,3-propanediol; (B) a resol type phenolic resin; (C) a basic compound; and water.

JP 2003 246006 is concerned with a coated metal sheet having a prime coat obtained by applying a prime coating composition (A) constituted of a polyester resin composition (a) and a resol type phenolic resin and/or an amino resin (b), and a face coat obtained by applying a face coating composition (B) constituted of a polyester resin (c) having a glass transition temperature of 60-120°C, and wherein the resol type phenolic resin and/or an amino resin (d) and a lubricity giving agent (e) is formed on the prime coat.

Prior Art Documents:

Patent Documents:

Patent document 1: JP-A-2001-246695
Patent document 2: JP-A-2007-76012
Patent document 3: JP-A-H7-195618
Patent document 4: JP-A-2005-104146
Patent document 5: International Laid-Open WO2007/91740

Outline of the Invention:

Problems that the Invention is to Solve:

It is, therefore, an object of the present invention to provide a coated metal sheet which is, further, covered with an organic resin, and has excellent applicability for producing cans, has excellent dent resistance to cope with even highly corrosive contents, and offers advantage in economy, too.

Another object of the present invention is to provide a can body and a can lid having excellent applicability for being formed into cans and excellent dent resistance.

Means for Solving the Problems:

According to the present invention, there is provided a coated metal sheet further covered with an organic resin obtained by: forming, on at least one surface of a metal sheet, a coating film that contains a polyester resin having a glass transition temperature (hereinafter often "Tg") of 20 to 55°C, a phenol resin and an acid catalyst, wherein said glass transition temperature is measured using a differential scanning calorimeter under the condition of temperature rising rate of 10°C/min; and further forming thereon an organic resin layer, wherein as a dicarboxylic acid component that constitutes the polyester resin, there are contained an aromatic dicarboxylic acid and an aliphatic dicarboxylic acid having 6 to 14 carbon atoms at a molar ratio of 95:5 to 80:20.

In the coated metal sheet further covered with the organic resin of the invention, it is desired that:

1. The aromatic dicarboxylic acid is terephthalic acid and/or isophthalic acid, and the aliphatic dicarboxylic acid having 6 to 14 carbon atoms is sebacic acid;

2. The polyester resin has an acid value of 10 to 40 mgKOH/g;

3. The phenol resin is obtained by alkoxymethylation of methylol groups of a m-cresol-derived phenol resin with n-butanol;

4. The phenol resin is contained in an amount in a range of 5 to 50 parts by mass per 100 parts by mass of the polyester resin, and the acid catalyst is contained in an amount in a range of 0.1 to 5 parts by mass per 100 parts by mass of the polyester resin;

5. The coating film is formed from an aqueous coating composition that contains a water-soluble and/or water-dispersible polyester resin, a phenol resin, an acid catalyst and an aqueous medium;

6. The water-soluble and/or water-dispersible polyester resin is a water-soluble and/or water-dispersible polyester resin that is rendered aqueous by neutralizing carboxylic acid groups in molecular chains thereof with a basic compound; and 7. The metal sheet is an aluminum sheet.

According to the present invention, further, there are provided a can body and a can lid made from the coated metal sheet further covered with the organic resin.

According to the present invention, further, there is provided an aqueous coating composition for forming the coating film of the coated metal sheet further covered with the organic resin, wherein the aqueous coating composition contains a water-soluble and/or water-dispersible polyester resin, a phenol resin, an acid catalyst and an aqueous medium.

Effects of the Invention:

The coated metal sheet further covered with the organic resin of the invention has excellent applicability for producing cans without permitting the organic resin layer to peel at the flange-forming portion even during the heat treatment executed after the can wall has been formed, and is capable of providing seamless cans having such an excellent dent resistance as to suppress the occurrence of corrosion at the dent portions even when the cans are filled with highly corrosive contents such as acid beverages.

Moreover, when the coating film is formed by applying the aqueous coating composition containing the water-soluble and/or water-dispersible polyester resin, phenol resin and aqueous medium onto the metal sheet, advantage is obtained in economy and decreased burden is exerted on the environment as compared to when the coating film is formed by using a coating composition of the type of organic solvent, since the medium is mostly water.

The above-mentioned effects of the invention will become obvious also from the results of Examples appearing later.

Namely, excellent applicability for producing cans and dent resistance are exhibited if the seamless cans are formed by using the coated metal sheet further covered with the organic resin of the invention that is obtained by forming the organic resin layer on the coated metal sheet which has, formed on the surface thereof, the coating film that contains the polyester resin having Tg of 20°C to 55°C, the phenol resin and the acid catalyst (Examples 1 to 20).

On the other hand, a metal sheet covered with an organic film without any pretreatment except for chromic phosphate treatment has excellent applicability for producing cans but as poor dent resistance (Comparative Example 6).

It is, further, learned that the coated metal sheets similarly covered with an organic resin but containing no phenol resin or no acid catalyst, have poor applicability for producing cans (Comparative Examples 2 and 3).

Moreover, it is learned that the coated metal sheet similarly covered with an organic resin but using a polyester resin having Tg of lower than 20°C exhibits poor applicability for producing cans and poor dent resistance (Comparative Example 4). Furthermore, it is learned that the coated metal sheet similarly covered with an organic resin but using a polyester resin having Tg of higher than 55°C exhibits excellent applicability for producing cans but poor dent resistance (Comparative Example 5).

Brief Description of the Drawing:

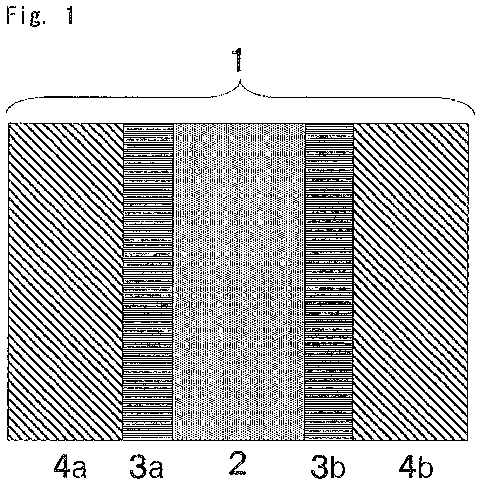

[Fig. 1] is a view illustrating a sectional structure of a coated metal sheet further covered with an organic resin of the present invention.

Modes for Carrying Out the Invention:

(Coating film)

In the coated metal sheet further covered with the organic resin of the invention, an important feature resides in that the coating film formed on at least one surface of the metal sheet contains a polyester resin having Tg in a range of 20 to 55°C, a phenol resin and an acid catalyst.

(Polyester resin)

In the invention, the polyester resin that forms the coating film has Tg in a range of 20°C to 55°C and, specifically, 28°C to 53°C accounting for the exhibition of excellent dent resistance when seamless cans are formed and applicability for producing cans. If Tg is higher than the above range, the coating film that is formed tends to become hard. In case the can body receives an external shock (dented), therefore, the coating film becomes likely to be cracked, i.e., a decrease in the dent resistance. If Tg is lower than the above range, on the other hand, the coating film tends to undergo cohesive failure during the heat treatment due to the lack of heat resistance. As a result, the organic resin layer is often peeled deteriorating the applicability for producing cans. Besides, waterproof property and barrier property against corrosive components often become low and hence deteriorating the dent resistance.

In the invention, further, the coating film may be formed by blending two or more kinds of polyester resins having different Tg. In this case, too, the Tg of the blended polyester resin as calculated from the following formula should lie in the above-mentioned range of Tg.

$$1/Tg \;=\; (W_1/Tg_1) \;+\; (W_2/Tg_2) \;+\; ... \;+\; (W_m/Tg_m)$$

$$W_1 \;+\; W_2 \;+\; ... \;+\; W_m \;=\; 1$$

wherein Tg is a glass transition temperature (K) of a blend of polyester resins, and $T_1$, $Tg_2$, ..., $Tg_m$ are glass transition temperatures (K) of the respective polyester resins (polyester resin 1, polyester resin 2, ..., polyester resin m) that are used, and $W_1$, $W_2$, ..., $W_m$ are weight fractions of the respective polyester resins (polyester resin 1, polyester resin 2, ..., polyester resin m) .

As the polycarboxylic acid component constituting the polyester resin, there can be exemplified aromatic dicarboxylic acids such as terephthalic acid, isophthalic acid, orthophthalic acid and naphthalenedicarboxylic acid; aliphatic dicarboxylic acids such as succinic acid, glutaric acid, adipic acid, azelaic acid, sebacic acid, dodecanedioic acid and dimer acid; unsaturated dicarboxylic acids such as maleic acid (anhydride), fumaric acid and adduct of terpene-maleic acid; alicyclic dicarboxylic acids such as 1,4-cyclohexanedicarboxylic acid, tetrahydrophthalic acid, hexahydroisophthalic acid and 1,2-cyclohexenedicarboxylic acid; and polycarboxylic acids having a valence of 3 or more, such as trimellitic acid (anhydride), pyromellitic acid (anhydride) and methylcyclohexenetricarboxylic acid, from which one or two or more of them are selected and used.

In the invention, in particular, a polyester resin is used having polycarboxylic acid components which constitute the polyester resin and which mainly contain an aromatic dicarboxylic acid and an aliphatic dicarboxylic acid having 6 to 14 carbon atoms at a molar ratio of 95:5 to 80:20 and, specifically, 92:8 to 83:17. This makes it possible to attain a balance among the strength, heat resistance, waterproof property and shock resistance of the coating film, and therefore improves dent resistance and applicability for producing cans. If the amount of the aliphatic dicarboxylic acid is smaller than the above range, the coating film has a decreased shock resistance and often dent resistance poorer than that of if the amount thereof is within the above range. If the amount of the aliphatic dicarboxylic acid is larger than the above range, on the other hand, the coating film has decreased strength, decreased heat resistance and decreased waterproof property, and often has poorer applicability for producing cans and poorer dent resistance than those of if the amount thereof is within the above range.

As the aromatic dicarboxylic acid, there can be exemplified terephthalic acid, isophthalic acid, orthophthalic acid and naphthalenedicarboxylic acid. As the aliphatic dicarboxylic acid having 6 to 14 carbon atoms, there can be exemplified adipic acid, pimelic acid, suberic acid, azelaic acid, sebacic acid and dodecanedioic acid.

The invention specifically uses the terephthalic acid and/or the isophthalic acid as the aromatic polycarboxylic acid, and uses the sebacic acid as the aliphatic polycarboxylic acid having 6 to 14 carbon atoms.

As the polyhydric alcohol component that constitutes the polyester resin, though not specifically limited thereto only, there can be exemplified aliphatic glycols such as ethylene glycol, propylene glycol (1,2-propanediol), 1,3-propanediol, 1,4-butanediol, 1,2-butanediol, 1,3-butanediol, 2-methyl-1,3-propanediol, neopentyl glycol, 1,5-pentanediol, 1,6-hexanediol, 3-methyl-1,5-pentanediol, 2-ethyl-2-butyl-1,3-propanediol, 2,4-diethyl-1,5-pentanediol, 1-methyl-1,8-octanediol, 3-methyl-1,6-hexanediol, 4-methyl-1,7-heptanediol, 4-methyl-1,8-octanediol, 4-propyl-1,8-octanediol and 1,9-nonanediol; ether glycols such as diethylene glycol, triethylene glycol, polyethylene glycol, polypropylene glycol and polytetramethylene glycol; alicyclic polyalcohols such as 1,4-cyclohexanedimethanol, 1,3-cyclohexanedimethanol, 1,2-cyclohexanedimethanol, tricyclodecane glycols and hydrogenated bisphenols; and trihydric or more highly hydric polyalcohols such as trimethylolpropane, trimethylolethane and pentaerythritol, from which any one or two or more kinds of them are selected and used in combination.

In the invention, though not limited thereto only, it is desired to use a diol component such as ethylene glycol, propylene glycol, 1,4-butanediol or neopentyl glycol. It is, further, desired that the 1,4-butanediol is contained in an amount of 10 to 50% by mol per the whole diol components.

It is desired that the polyester resin has an acid value in a range of 10 to 40 mgKOH/g and, specifically, 10 to 25 mgKOH/g. If the acid value is smaller than the above range, adhesiveness to the metal base material decreases, corrosion easily takes place under the coating film, and dent resistance deteriorates compared to if the acid value is within the above range. Besides, difficulty may be involved if an aqueous coating material is to be prepared. If the acid value is larger than the above range, on the other hand, the coating film easily absorbs water and dent resistance may decrease as compared to if the acid value is within the above range.

A desired acid value can be imparted to the polyester resin by, for example, a method of polymerizing a resin and, thereafter, adding thereto one or two or more kinds of acid anhydrides such as trimellitic anhydride, phthalic anhydride, pyromellitic anhydride, succinic anhydride, 1,8-naphthalic anhydride, 1,2-cyclohexanedicarboxylic anhydride, cyclohexane-1,2,3,4-tetracarboxylic acid-3,4 anhydride, ethylene glycol bisanhydrotrimellitate, 5-(2,5-dioxotetrahydro-3-furanyl)-3-methyl-3-cyclohexene-1, 2-dicarboxylic anhydride and naphthalene1,8:4,5-tetracarboxylic dianhydride, and conducting a depolymerization reaction in an inert atmosphere.

It is desired that the polyester resin has a number average molecular weight in a range of 5, 000 to 25, 000 though not limited thereto only. If it is smaller than the above range, the formed coating film may have a decreased applicability for producing cans and decreased dent resistance. If it is larger than the above range, on the other hand, the reactivity decreases with the phenol resin which is a curing agent component, and the coating film may not be cured to a sufficient degree.

In the invention, if the coating film is formed by using an aqueous coating composition that contains a water-soluble and/or water-dispersible polyester resin, a phenol resin, an acid catalyst and an aqueous medium, then it is desired that the water-soluble and/or a water-dispersible polyester resin is a polyester resin which is rendered aqueous by neutralizing the carboxylic acid groups in the molecular chains with a basic compound. In this case, there can be formed a coating film having a waterproof property higher than that of the polyester resin which is rendered aqueous by neutralizing the polar groups other than the carboxylic acid group such as sulfonic acid group and phosphoric acid group with the basic compound. Besides, the coating film exhibits further improved dent resistance.

As the basic substance used for neutralizing the carboxylic acid groups, there can be exemplified amine compounds and inorganic bases such as sodium hydroxide and potassium hydroxide. It is, however, desired to use a volatile amine compound from such a standpoint that the film after dried and fired no longer contains the basic substance. Concrete examples of the amine compound include alkylamines such as ammonia, trimethylamine, triethylamine and n-butylamine; alcoholamines such as 2-dimethylaminoethanol, diethanolamine, triethanolamine, aminomethylpropanol and dimethylaminomethylpropanol; polyfunctional amines such as ethylenediamine and diethylenetriamine; amines having branched alkyl groups, such as branched alkylamine having 3 to 6 carbon atoms and, specifically, 3 to 4 carbon atoms, like isopropylamine, sec-butylamine, tert-butylamine and isoamylamine; and heterocyclic amines such as saturated heterocyclic amines having one nitrogen atom, like pyrrolidine, piperidine and morpholine. Among them, the 2-dimethylaminoethanol can be favorably used.

(Phenol resin)

The invention uses a phenol resin as a curing agent for curing the polyester resin. As the phenol resin, there is used a resol type phenol resin obtained by using any one or more kinds of phenol monomers such as phenol, o-cresol, p-cresol, p-tert-butylphenol, o-ethylphenol, 2,3-xylenol, 2,5-xylenol, phenol, m-cresol, m-ethylphenol, 3,5-xylenol and m-methoxyphenol being mixed together, and reacting these phenol monomers with formaldehyde in the presence of an alkali catalyst.

In the invention, the phenol resin is desirably the one in which part or whole of the methylol groups contained therein are alkoxymethylated with alcohols having 1 to 12 carbon atoms from the standpoint of reactivity with the polyester resin. Specifically, it is desired to use the resol type phenol resin derived from the m-cresol and of which the methylol group is alkoxymethylated with n-butanol.

In the invention, it is desired that the coating film contains the phenol resin in an amount in a range of 5 to 50 parts by mass and, specifically, 10 to 40 parts by mass per 100 parts by mass of the polyester resin.

If the content of the phenol resin is smaller than the above range, the coating film is not fully cured. In the step of heat treatment after the can wall has been formed, therefore, the coating film undergoes internal cohesive failure due to lack of heat resistance. As a result, the organic resin layer is often peeled deteriorating the applicability for producing cans. If the content of the phenol resin is larger than the above range, on the other hand, the curing takes place to an excess degree, and the dent resistance often decreases due to a decrease in the shock resistance of the coating film.

(Acid catalyst)

In the invention, an acid catalyst is added as a curing catalyst to accelerate the crosslinking reaction of the polyester resin with the phenol resin and to efficiently enhance crosslinking density at a low temperature in a short period of time.

As the acid catalyst, there can be exemplified sulfuric acid, p-toluenesulfonic acid, dodecylbenzenesulfonic acid, naphthalenesulfonic acid, dinonylnaphthalenesulfonic acid, dinonylnapthalenedisulfonic acid, camphorsulfonic acid, phosphoric acid and amine-neutralized products thereof (those partly or wholly neutralized with an amine compound), and from which one or two or more of them are selected and used in combination. Among these acid catalysts, particularly preferred are organosulfonic acid compounds such as dodecylbenzenesulfonic acid, p-toluenesulfonic acid and camphorsulfonic acid, as well as amine-neutralized products thereof from the standpoint of compatibility with the resin.

It is desired that the acid catalyst is contained in an amount in a range of 0.1 to 5 parts by mass and, specifically, 0.5 to 3 parts by mass per 100 parts by mass of the polyester resin. If the content of the acid catalyst is smaller than the above range, the curing reaction may not often be accelerated to a sufficient degree. If the content of the acid catalyst is larger than the above range, on the other hand, the coating film may possess decreased waterproof property and deteriorated dent resistance.

(Aqueous coating composition)

The coating film of the coated metal sheet further covered with the organic resin of the present invention, as described above, is desirably formed by applying, on a metal sheet, an aqueous coating composition that contains a water-soluble and/or water-dispersible polyester resin, a phenol resin, an acid catalyst and an aqueous medium.

As the aqueous medium, there can be used known aqueous medium such as distilled water, ion-exchanged water or pure water and, like the conventional aqueous compositions, can contain an organic solvent such as an alcohol, a polyhydric alcohol or a derivative thereof. If the solvent is used, its amount is 5 to 30% by weight relative to the resin components in the aqueous coating composition. If contained in an amount in the above range, the solvent helps improve the film formability. The organic solvent is, desirably, amphoteric and its examples include methyl alcohol, ethyl alcohol, isopropyl alcohol, n-butanol, methyl ethyl ketone, butyl cellosolve, propylene glycol monopropyl ether, ethylene glycol monobutyl ether, propylene glycol monomethyl ether, propylene glycol monobutyl ether, dipropylene glycol monomethyl ether, dipropylene glycol monobutyl ether, tripropylene glycol monomethyl ether and 3-methyl-3-methoxybutanol.

(Method of forming the coating film on the metal sheet)

There is no specific limitation on the method of forming the coating film on the metal sheet. First, to wash the surfaces of the metal sheet such as removing the rolling oil and the antirust oil, a degreasing treatment is executed followed by washing with water and surface adjustment. Thereafter, the aqueous coating composition containing the water-soluble and/or water-dispersible polyester resin, phenol resin, acid catalyst and aqueous medium is applied onto the metal sheet and is heated and dried to form the coating film.

There is no specific limitation on the degreasing treatment, and there can be exemplified the washing with an alkali or with an acid that has heretofore been employed for degreasing metal sheets such as of aluminum or aluminum alloy. In the invention, from the standpoint of close adhesion between the coating film and the metal base material, it is desired to effect the washing with an alkali and then with an acid, or the washing with the acid without effecting the washing with the alkali. In the above degreasing treatment, the washing with the alkali is, usually, executed by using an alkaline cleaner while the washing with the acid is executed by using an acid cleaner.

There is no specific limitation on the alkaline cleaner, and there can be used, for example, the one that has been used for the ordinary washing with alkali, such as "Surf Cleaner 420N-2" manufactured by Nippon Paint Co., Ltd. There is no specific limitation on the acid cleaner, either, and there can be used inorganic acids such as sulfuric acid, nitric acid and hydrochloric acid. After the degreasing treatment is executed, fats and oils remaining on the surfaces of the metal sheet are removed by washing with water. Thereafter, water on the surfaces of the metal sheet is removed by blowing the air or by drying with the hot air.

To apply the aqueous coating composition containing the water-soluble and/or water-dispersible polyester resin, phenol resin and acid catalyst onto the metal sheet, there can be employed a known method such as roll-coating method, spraying method, dipping method or brush-applying method. The coating film is fired under the conditions of 150 to 300°C for 5 seconds to 5 minutes and, preferably, 200 to 280°C for 10 seconds to 3 minutes.

The thickness of the coating film is not specifically limited but is in a range of 0.1 to 10 $\mu$m and, specifically, 0.3 to 3 $\mu$m in a dry state. If the thickness of the coating film is smaller than the above range, a desired dent resistance may not be obtained. Even if the thickness of the coating film is larger than the above range, on the other hand, no further improvement is attained in the properties, which is disadvantageous in economy.

The coating film exhibits improved dent resistance if it has a large thickness. By controlling the thickness to lie in the above range, therefore, it is made possible to deal with even highly corrosive acidic beverages that contain, for example, salt at high concentrations.

(Organic resin layer)

In the coated metal sheet further covered with the organic resin of the invention, there is no specific limitation on the organic resin that constitutes the organic resin layer being directly applied onto the coating film that has been formed on the metal sheet. As the organic resin, there can be exemplified thermoplastic resins, i.e., polyolefins such as crystalline polypropylene, crystalline propylene-ethylene copolymer, crystalline poly(butene-1), crystalline poly(4-methylpenene-1), low-, medium- or high-density polyethylene, ethylene-vinyl acetate copolymer (EVA), ethylene-ethyl acrylate copolymer (EEA) and ionically crosslinked olefin copolymer (ionomer); aromatic vinyl copolymers such as polystyrene and styrene-butadiene copolymer; halogenated vinyl polymers such as polyvinyl chloride and vinylidene chloride resin; nitrile polymers such as acrylonitrile-styrene copolymer and acrylonitrile-styrene-butadiene copolymer; polyamides such as nylon 6, nylon 66, para- or metaxylene adipamide; polyesters such as polyethylene terephthalate (PET) and polytetramethylene terephthalate; polycarbonates; and polyacetals such as polyoxymethylene. A thermoplastic resin film constituted by these thermoplastic resins can be used as the organic resin layer.

Though a film formed by using a coating composition of the type of epoxy phenol or polyester can also be used as the organic resin layer, it is specifically desired to form the organic resin layer by using the thermoplastic resin.

In the invention, among the above thermoplastic resins, it is particularly desired to use the polyester resin as the organic resin layer.

As the polyester resin suited for forming the organic resin layer, there can be used a homopolyethylene terephthalate or a simple copolymerized polyester that contains acid components other than the terephthalic acid in an amount of not more than 30 mol% based on the acid components or that contains alcohol components other than the ethylene glycol in an amount of not more than 30 mol% based on the alcohol components, or there can be used a blend thereof.

As the acid components other than the terephthalic acid, there can be exemplified isophthalic acid, naphthalenedicarboxylic acid, cyclohexanedicarboxylic acid, P-β-oxyethoxybenzoic acid, diphenoxyethane-4,4'-dicarboxylic acid, 5-sodium sulfoisophthalic acid, hexahydroterephthalic acid, succinic acid, adipic acid, sebacic acid, dodecanedioic acid, dimer acid, trimellitic acid and pyromellitic acid.

As the alcohol components other than the ethylene glycol, further, there can be exemplified glycol components such as propylene glycol, 1,4-butanediol, neopentyl glycol, 1,6-hexylene glycol, diethylene glycol, triethylene glycol, cyclohexanedimethanol, ethylene oxide adduct of bisphenol A, trimethylolpropane and pentaerythritol.

Specifically, it is desired to use any one of a polyethylene terephthalate resin comprising an ethylene terephthalate unit, a polyethylene terephthalate/polyethylene isophthalate copolymer resin, a polyethylene terephthalate/polybutylene terephthalate copolymer resin, a polyethylene terephthalate/polyethylene naphthalate copolymer resin or a blend of polyethylene terephthalate resin and polybutylene terephthalate resin.

The polyester resin should have a molecular weight in a range in which a film can be formed, should have an intrinsic viscosity [η] of not less than 0.5 and, specifically, in a range of 0.52 to 0.70 as measured by using a phenol/tetrachloroethane mixed solvent from the standpoint of barrier property against corrosive components and mechanical properties, and should further have a glass transition temperature of not lower than 50°C and, specifically, in a range of 60°C to 80°C.

The polyester resin film can be, further, blended with known blending agents for films, such as lubricant, anti-blocking agent, pigment, antistatic agents and antioxidant according to known recipe.

The organic resin layer of a thermoplastic resin may be formed by forming a thermoplastic resin film and, thereafter, applying it onto the metal sheet by the heat-adhesion method, or may be formed by the extrusion-lamination method by, first, extruding the heated and molten thermoplastic resin into a film by using an extruder and then applying it directly onto the metal sheet.

If the thermoplastic resin film is to be formed first and is applied, then the film may have been stretched. Here, however, it is desired that the film has not been stretched from the standpoint of formability and dent resistance.

Usually, it is desired that the thickness of the thermoplastic resin film is in a range of 5 to 40 μm.

The organic resin layer of the thermoplastic resin can assume a two-layer constitution. If the polyester resin is used, it is desired that the lower layer is formed from a polyester resin which mainly includes an ethylene terephthalate unit and which contains at least one acid components such as isophthalic acid or naphthalenedicarboxylic acid in an amount of 1 to 30 mol%, wherein the polyester resin for the lower layer has higher content of the the acid components than another polyester for the upper layer from the standpoint of, specifically, close adhesion during the working and dent resistance.

(Metal sheet)

As the metal sheet for use in the present invention, there can be used various steel sheets and aluminum sheets. As the steel sheet, there can be used the one that is obtained by annealing a cold-rolled steel sheet and, thereafter, subjecting it to the secondary cold rolling. There can be, further, used a clad steel sheet. As the aluminum sheet, there can be used the so-called pure aluminum sheet as well as an aluminum alloy sheet. In the invention, the aluminum alloy sheet is particularly preferably used.

The initial thickness of the metal sheet is not specifically limited and varies depending on the kind of the metal and use or size of the containers. The metal sheet, however, should have a thickness of, usually, 0.10 to 0.50 mm. Specifically, the steel sheet should have a thickness of 0.10 to 0.30 mm and the light metal sheet should have a thickness of 0.15 to 0.40 mm.

In the invention, by simply forming the coating film that contains the polyester resin having Tg of 20 to 55°C, phenol resin and acid catalyst on the metal sheet that has been degreased as described above, it is allowed to form the organic resin layer thereon and to form a seamless can that exhibits a sufficient degree of dent resistance and applicability for producing cans. Here, a conventional surface treatment may also be executed in combination, such as chemical conversion treatment or plating.

If a steel sheet is used as the metal sheet, the surface treatment may comprise one, two or more kinds of surface treatments such as zinc plating, tin plating, nickel plating, electrolytic chromate treatment, chromate treatment and phosphate treatment. If an aluminum sheet is used as the metal sheet, the surface treatment may include an inorganic chemical conversion treatment such as chromic phosphate treatment, zirconium phosphate treatment or phosphate treatment; an organic/inorganic composite chemical conversion treatment based on a combination of an inorganic chemical conversion treatment with an organic component as exemplified by a water-soluble resin such as an acrylic resin or a phenol resin, and tannic acid; or an application-type treatment based on a combination of a water-soluble resin such as an acrylic resin with a zirconium salt.

Fig. 1 illustrates a sectional structure of a coated metal sheet further covered with an organic resin of the present invention. The coated metal sheet further covered with the organic resin 1 includes coating films 3a, 3b, and organic resin layers 4a and 4b formed on both surfaces of a metal sheet 2. In a concrete example shown in Fig. 1, the organic resin layers 4a and 4b are formed, via the coating films 3a and 3b, on both the inner and outer surfaces of the metal sheet 2 that is forming a container. In the coated metal sheet further covered with the organic resin of the invention, however, the coating film and the organic resin layer may have been formed at least on a surface that becomes the inner surface of the can body or the can lid.

(Can body and method of its production)

The can body comprising the coated metal sheet further covered with the organic resin of the invention, can be produced by a conventional method of forming.

The coated metal sheet further covered with the organic resin of the invention features excellent adhesion of films during the working, and can be formed into a seamless can through a severe working such as draw working, draw· deep draw working, draw· ironing working, or draw· bend-elongation· ironing working without causing breakage in the can wall or peeling of the organic resin layer in the flange-forming portion.

Through the bend-elongation or, further, through the ironing working in the draw-redraw working of the coated metal sheet further covered with the organic resin, it is desired that the side wall of the seamless can assumes a thickness which is reduced down to 20 to 95% and, specifically 25 to 85% of the initial thickness of the coated metal sheet further covered with the organic resin.

The seamless can that is obtained is subjected to at least one stage of the heat treatment to remove residual strain in the organic resin layer caused by the working, to volatilize, from the surface, the lubricant used for the working and, further, to dry and cure the inks printed on the surface. The container after heat treatment is quickly cooled or is left to cool and is, thereafter, subjected, as desired, to one stage or a multiplicity of stages of necking followed by flanging to obtain a can for wrap-seaming.

(Can lid and method of its production)

The can lid of the coated metal sheet further covered with the organic resin of the invention, can be formed by a conventional method of forming can lids.

The can lid may assume a conventional shape such as of easy-open ends having a score that forms an opening for pouring out the content and a tab for opening.

EXAMPLES

The present invention will now be described in detail by way of concrete Examples to which only, however, the invention is in no way limited. In the following description, "parts" are "by mass".

(Synthesis of the polyester resins and preparation of the aqueous dispersion solutions)

Into a reaction vessel equipped with a stirrer, a heating device, a thermometer and a partial reflux condenser, there were fed polycarboxylic acids, polycarboxylic acid esters, polyhydric alcohols and a catalyst which are the starting materials in suitable amounts. The starting materials were then reacted at a reaction temperature of 210 to 250°C, under a reduced pressure of 2 mmHg or lower and for 4 to 6 hours to synthesize polyester resins A to M shown in Table 1. The obtained polyester resins A to M were measured for their compositions, glass transition temperatures (Tg) and acid values by the methods described below.

To 100 parts of the polyester resin synthesized above was added 100 parts of methyl ethyl ketone, and the mixture thereof was stirred at 80°C for one hour so that the polyester resin was dissolved. Then, 4 parts of 2-dimethylaminoethanol and 10 parts of 2-propanol were added thereto and, thereafter, 250 parts of ion-exchanged water was added thereto with stirring so that the polyester resin was dispersed in water. Next, by using an evaporator, the solvent was distilled off under reduced pressure, and the mixture was filtered to prepare an aqueous dispersion solution of the polyester resin of a solid content of about 30%.

(Compositions of the polyester resins)

The synthesized polyester resins after dried in vacuum were dissolved in deuterated chloroform and their composition were calculated based on a $^1$H-NMR measurement.
Equipment used: JNM-ECA400 manufactured by JEOL Ltd.

(Glass transition temperatures (Tg) of the polyester resins)

The glass transition temperatures of the synthesized polyester resins were found by using a differential scanning calorimeter (DSC). The measurement was taken under the condition of temperature rising rate of 10°C/min.
Equipment used: EXSTAR 600 manufactured by Seiko Instruments Inc.

(Acid values of the polyester resins)

The acid values of the synthesized polyester resins were found by a method specified under JIS K0070. The sample was accurately weighed to be 0.2 g and was dissolved in 20 ml of chloroform which was then titrated with 0.01 N potassium hydroxide (ethanol solution) to find the acid value. Phenolphthalein was used as an indicator.

(Number average molecular weights)

The number average molecular weights of the synthesized polyester resins were measured by the gel permeation chromatography (GPC) based on the standard polystyrene sample. Tetrahydrofuran was used as a solvent.

(Synthesis of the phenol resin)

Into a reaction vessel equipped with a stirrer, a heating device, a thermometer and a partial reflux condenser, there were fed 100 parts of m-cresol, 180 parts of 37 mass% formalin, and a suitable amount of sodium hydroxide as a catalyst. The mixture was reacted at 60°C for 3 hours and was, thereafter, dehydrated at 50°C under a reduced pressure. Next, 100 parts of n-butanol and a suitable amount of phosphoric acid as a catalyst were added thereto to carry out the reaction at 110°C for 4 hours. After the reaction has been finished, the obtained solution was refined to obtain an m-cresol resol type phenol resin of a solid content of 50% of which the methylol groups had been alkoxymethylated with the n-butanol.

(Preparation of aqueous coating compositions)

[Example 1]

By using 333 parts of an aqueous dispersion solution of the polyester resin A (100 parts of solid content), 40 parts of an n-butanol solution of the above phenol resin (20 parts of solid content), one part of dodecylbenzenesulfonic acid, 0.3 parts of triethylamine, 400 parts of 2-propanol and 1700 parts of ion-exchanged water, there was prepared an aqueous coating composition of a solid content of about 5%. As the dodecylbenzenesulfonic acid, there was used the "dodecylbenzenesulfonic acid (soft type) (mixture)" produced by Tokyo Chemical Industry Co., Ltd.

(Production of the coated metal sheet)

An aluminum sheet (3104 Alloy sheet, 0.28 mm in thickness) was used as the metal sheet. First, the aluminum sheet was dipped in an aqueous solution (50°C) containing 2% of an alkaline cleaner "Surf Cleaner 420N-2" (trade name) produced by Nippon Paint Co., Ltd. for 6 seconds so as to be washed with alkali. Next, the aluminum sheet was washed with water and dipped in a 2% aqueous solution of sulfuric acid (50°C) for 6 seconds so as to be washed with acid, followed by washing with water and drying.
By using a wire bar coater, the aqueous coating composition was applied onto the surface of the metal sheet that becomes the inner surface side of the can so as to form a coating film of an arbitrary thickness. Then a coating film was formed on the metal sheet by firing at 250°C for 30 seconds to obtain a coated metal sheet.

(Production of the coated metal sheet further covered with the organic resin)

The obtained coated metal sheet was heated in advance at a temperature of 250°C. On both surfaces of the coated metal sheet, by using laminate rolls, there were thermally press-adhered the organic resin layers, i.e., the thermoplastic resin films of a double-layer structure comprising a 8 μm-thick lower layer of a polyethylene terephthalate containing 15 mol% of isophthalic acid and a 8 μm-thick upper layer of a polyethylene terephthalate containing 2 mol% of isophthalic acid. The films were readily cooled with water to obtain a coated metal sheet further covered with the organic resin.

(Production of the seamless cans)

A paraffin wax was electrostatically applied onto both surfaces of the above coated metal sheet further covered with the organic resin which was then punched in a circular shape of a diameter of 156 mm to form a shallow drawn cup. Next, the shallow drawn cup was subjected to the redraw-ironing working, doming, trimming at the open edge portion and, thereafter, to the heat treatment at 201°C for 75 seconds and, further, at 210°C for 80 seconds. The open end was, further, subjected to the necking and flanging to produce a seamless can having a 211-diameter at the can body and a 206-diameter at the neck portion, and having a capacity of 500 ml. The seamless can possessed the following specifications.

> Diameter of can body: 66 mm
> Height of can body: 168 mm
> Average reduction ratio of sheet thickness in the can wall with respect to the initial sheet thickness: 60%

[Examples 2 to 20, Comparative Examples 1 to 5]

Coated metal sheets, coated metal sheets further covered with the organic resin, and seamless cans were produced in the same manner as in Example 1 but preparing aqueous coating compositions while suitably changing the kinds of the polyester resins that were used, amounts of the components and concentrations of the solid contents. Table 2 shows the kinds of the polyester resins that were used, amounts of the solid contents of the phenol resins and of the acid catalyst (dodecylbenzenesulfonic acid) per 100 parts of the solid content of the polyester resins in the aqueous coating compositions, and thicknesses of the formed films.

[Comparative Example 6]

An aluminum sheet having its surfaces treated with chromic phosphate (chemical conversion treatment) (3104 Alloy sheet, 0.28 mm in thickness, weight of chromium in the surface-treating film: 20 mg/m$^2$) was used as the metal sheet. A coated metal sheet further covered with the organic resin was produced by forming the organic resin layer thereon in a manner as described above in Examples, and from which a seamless can was produced.

(Evaluating the peeling in the flange portion during the heat treatment)

To evaluate the peeling in the flange portion during the heat treatment, the can body was subjected up to the working of trimming as described above in the paragraph of "Production of the seamless can". Thereafter, by using an oven, the can was heat-treated at 201°C for 75 seconds and then at 210°C for 80 seconds. Thereafter, the open end (flange-forming portion) of the can body was observed through a microscope to evaluate the degree of peeling of the organic resin layer from the open end of the can body. Table 2 shows the results of evaluation.

◎: Maximum length of the peeled portion is less than 0.05 mm.
○: Maximum length of the peeled portion is not less than 0.05 mm but is less than 0.1 mm.
∆: Maximum length of the peeled portion is not less than 0.1 mm but is less than 0.2 mm.
✕: Maximum length of the peeled portion is not less than 0.2 mm.

(Evaluating the dent resistance)

To evaluate the dent resistance, the can body was produced as described above in the paragraph of "Production of the seamless can". Thereafter, the obtained seamless can was filled with 500 g of an acidic model solution containing salt, and was wrap-seamed with a lid in a customary manner. Thereafter, the can was left to stand still sideways. A one-kilogram metal weight having a spherical surface 66 mm in diameter was fallen vertically on the lower surface portion of the side wall of the can from a height of 60 mm at room temperature to cause the can body to be depressed (dented). Thereafter, the can body was stored with its lid facing upward at 37°C for 15 days, and the corroded state at the depressed (dented) portion on the inner surface of the can was visually observed to evaluate the dent resistance.

The model solution used for the test was the one that contained 0.2% of salt and to which the citric acid was added such that the pH was adjusted to be 2.5.

◎: No corrosion was seen in the dented portion.
○: Almost no corrosion was seen in the dented portion.
∆: Corrosion was seen locally in the dented portion.
✕: Corrosion was seen over the whole dented portion.

Table 1

| | | Dicarboxylic acid component (molar ratio) | | | | Diol component (molar ratio) | | | |
|---|---|---|---|---|---|---|---|---|---|
| | | Aromatic dicarboxylic acid | | Aliphatic dicarboxylic acid | | *1 | *2 | *3 | *4 |
| | | *5 | *6 | *7 | *8 | | | | |
| Synthesis Example 1 | polyester resin A | 78 | 10 | 12 | | 15 | 55 | 30 | |
| Synthesis Example 2 | polyester resin B | 71 | 14 | 15 | | 13 | 47 | 40 | |
| Synthesis Example 3 | polyester resin C | 85 | 7 | 8 | | 18 | 62 | 20 | |
| Synthesis Example 4 | polyester resin D | 68 | 15 | 17 | | 12 | 43 | 45 | |
| Synthesis Example 5 | polyester resin E | 76 | 10 | 14 | | 44 | 32 | | 24 |
| Synthesis Example 6 | polyester resin F | 73 | 10 | 17 | | 48 | 24 | | 28 |
| Synthesis Example 7 | polyester resin G | 69 | 12 | 19 | | 52 | 15 | | 33 |
| Synthesis Example 8 | polyester resin H | 66 | 12 | 22 | | 55 | 8 | | 37 |
| Synthesis Example 9 | polyester resin I | 55 | 31 | | 14 | 50 | | | 50 |
| Synthesis Example 10 | polyester resin J | 41 | 45 | 14 | | 63 | 13 | 24 | |
| Synthesis Example 11 | polyester resin K | 66 | 26 | 8 | | 14 | 51 | 35 | |
| Synthesis Example 12 | polyester resin L | 62 | 14 | 24 | | 60 | | | 40 |
| Synthesis Example 13 | polyester resin M | 93 | 3 | 4 | | 20 | 70 | 10 | |

*1: Ethylene glycol, *2: Propylene glycol, *3: 1,4-butanediol, *4: Neopentyl glycol,

*5: Terephthalic acid, *6: Isophthalic acid, *7:Sebacic acid, *8: Adipic acid

13

Table 1 (continued)

| | Molar ratio of aromatic dicarboxylic acid : aliphatic dicarboxylic acid | Tg (°C) | Acid value (KOHmg/g) | Number average molecular weight |
|---|---|---|---|---|
| Synthesis Example 1 | 88:12 | 41 | 18 | 11000 |
| Synthesis Example 2 | 85:15 | 29 | 17 | 11600 |
| Synthesis Example 3 | 92:8 | 53 | 19 | 9800 |
| Synthesis Example 4 | 83:17 | 23 | 16 | 13000 |
| Synthesis Example 5 | 86:14 | 40 | 13 | 12200 |
| Synthesis Example 6 | 83:17 | 34 | 12 | 12900 |
| Synthesis Example 7 | 81:19 | 28 | 10 | 13600 |
| Synthesis Example 8 | 78:22 | 23 | 10 | 14300 |
| Synthesis Example 9 | 86:14 | 40 | 15 | 9000 |
| Synthesis Example 10 | 86:14 | 39 | 44 | 10600 |
| Synthesis Example 11 | 92:8 | 48 | 5 | 14100 |
| Synthesis Example 12 | 76:24 | 18 | 7 | 15000 |
| Synthesis Example 13 | 96:4 | 66 | 20 | 8900 |

Table 2

| | Polyester resin | | | | | Phenol resin | Acid catalys | Film thickne |
|---|---|---|---|---|---|---|---|---|
| | Species | *1 | Tg (°C) | Acid value (KOHmg/g) | Parts by mass | Parts by mass | Parts by mass | (μm) |
| Ex. 1 | polyester resin A | 88 : 12 | 41 | 18 | 100 | 20 | 1 | 0.7 |
| Ex. 2 | polyester resin B | 85 : 15 | 29 | 17 | 100 | 20 | 1 | 0.7 |
| Ex. 3 | polyester resin C | 92 : 8 | 53 | 19 | 100 | 20 | 1 | 0.7 |
| Ex. 4 | polyester resin D | 83 : 17 | 23 | 16 | 100 | 20 | 1 | 0.7 |
| Ex. 5 | polyester resin E | 86 : 14 | 40 | 13 | 100 | 20 | 1 | 0.7 |
| Ex. 6 | polyester resin F | 83 : 17 | 34 | 12 | 100 | 20 | 1 | 0.7 |
| Ex. 7 | polyester resin G | 81 : 19 | 28 | 10 | 100 | 20 | 1 | 0.7 |
| Ex. 8 | polyester resin I | 86 : 14 | 40 | 15 | 100 | 20 | 1 | 0.7 |
| Ex. 9 | polyester resin J | 86 : 14 | 39 | 44 | 100 | 20 | 1 | 0.7 |
| Ex. 10 | polyester resin K | 92 : 8 | 48 | 5 | 100 | 20 | 1 | 0.7 |
| Ex. 11 | polyester resin C | 92 : 8 | 53 | 19 | 100 | 10 | 1 | 0.7 |
| Ex. 12 | polyester resin A | 88 : 12 | 41 | 18 | 100 | 30 | 1 | 0.7 |
| Ex. 13 | polyester resin B | 85 : 15 | 29 | 17 | 100 | 40 | 1 | 0.7 |
| Ex. 14 | polyester resin G | 81 : 19 | 28 | 10 | 100 | 60 | 1 | 0.7 |
| Ex. 15 | polyester resin F | 83 : 17 | 34 | 12 | 100 | 20 | 1 | 0.4 |
| Ex. 16 | polyester resin E | 86 : 14 | 40 | 13 | 100 | 20 | 1 | 2.5 |
| Ex. 17 | polyester resin A | 88 : 12 | 41 | 18 | 100 | 20 | 0.2 | 0.7 |
| Ex. 18 | polyester resin A | 88 : 12 | 41 | 18 | 100 | 20 | 0.5 | 0.7 |
| Ex. 19 | polyester resin A | 88 : 12 | 41 | 18 | 100 | 20 | 3 | 0.7 |
| Ex. 20 | polyester resin A | 88 : 12 | 41 | 18 | 100 | 20 | 6 | 0.7 |

*1: Molar ratio of aromatic dicarboxylic acid : aliphatic dicarboxylic acid

EP 3 205 495 B1

Table 2 (continued)

| | Evaluation | |
|---|---|---|
| | Peel at flange portion during heat treatment | Dent resistance |
| Ex. 1 | ◎ | ◎ |
| Ex. 2 | ◎ | ◎ |
| Ex. 3 | ◎ | ◎ |
| Ex. 4 | ○ | ○ |
| Ex. 5 | ◎ | ◎ |
| Ex. 6 | ◎ | ◎ |
| Ex. 7 | ○ | ○ |
| Ex. 8 | ◎ | ○ |
| Ex. 9 | ◎ | △ |
| Ex. 10 | ◎ | △ |
| Ex. 11 | ○ | ◎ |
| Ex. 12 | ◎ | ○ |
| Ex. 13 | ◎ | ○ |
| Ex. 14 | △ | △ |
| Ex. 15 | ◎ | ○ |
| Ex. 16 | ○ | ◎ |
| Ex. 17 | ○ | ◎ |
| Ex. 18 | ◎ | ◎ |
| Ex. 19 | ◎ | ◎ |
| Ex. 20 | ◎ | △ |

EP 3 205 495 B1

Table 2 (continued)

| | Polyester resin | | | | | Phenol resin | Acid catalys | Film thickne |
|---|---|---|---|---|---|---|---|---|
| | Species | *1 | Tg (°C) | Acid value (KOHmg/g) | Parts by mass | Parts by mass | Parts by mass | (µm) |
| Comp. Ex. 1 | polyester resin H | 78 : 22 | 23 | 10 | 100 | 20 | 1 | 0.7 |
| Comp. Ex. 2 | polyester resin A | 88 : 12 | 41 | 18 | 100 | – | 1 | 0.7 |
| Comp. Ex. 3 | polyester resin E | 86 : 14 | 40 | 13 | 100 | 20 | – | 0.7 |
| Comp. Ex. 4 | polyester resin L | 76 : 24 | 18 | 7 | 100 | 20 | 1 | 0.7 |
| Comp. Ex. 5 | polyester resin M | 96 : 4 | 66 | 20 | 100 | 20 | 1 | 0.7 |
| Comp. Ex. 6 | chromic phosphate treatment | | | | | | | |

*1: Molar ratio of aromatic dicarboxylic acid : aliphatic dicarboxylic acid

**EP 3 205 495 B1**

Table 2 (continued)

| | Evaluation | |
|---|---|---|
| | Dent resistance | Peel at flange portion during heat treatment |
| Comp. Ex. 1 | △ | ○ |
| Comp. Ex. 2 | ◎ | × |
| Comp. Ex. 3 | ◎ | × |
| Comp. Ex. 4 | × | △ |
| Comp. Ex. 5 | × | ◎ |
| Comp. Ex. 6 | × | ◎ |

Industrial Applicability:

In forming the seamless cans by using the coated metal sheet further covered with the organic resin of the invention, there is realized excellent applicability for producing cans without the probability of peeling of the organic resin layer at the flange-forming portion even in the step of heat treatment after the can walls have been formed. Besides, there is obtained excellent dent resistance making it possible to deal with even strongly corrosive contents. Therefore, the coated metal sheet further covered with the organic resin of the invention can be favorably used for producing can bodies and can lids for containing acidic beverages that are strongly corrosive.

Description of Reference Numerals:

1:    coated metal sheet further covered with organic resin
2:    metal sheet
3:    coating film

4: organic resin layer

**Claims**

1. A coated metal sheet further covered with an organic resin obtained by:

forming, on at least one surface of a metal sheet, a coating film that contains a polyester resin having a glass transition temperature of 20 to 55°C, a phenol resin and an acid catalyst, wherein said glass transition temperature is measured using a differential scanning calorimeter under the condition of temperature rising rate of 10°C/min; and

further forming thereon an organic resin layer;

wherein as a dicarboxylic acid component that constitutes the polyester resin, there are contained an aromatic dicarboxylic acid and an aliphatic dicarboxylic acid having 6 to 14 carbon atoms at a molar ratio of 95:5 to 80:20.

2. The coated metal sheet further covered with the organic resin according to claim 1, wherein the aromatic dicarboxylic acid is terephthalic acid and/or isophthalic acid, and the aliphatic dicarboxylic acid having 6 to 14 carbon atoms is sebacic acid.

3. The coated metal sheet further covered with the organic resin according to claim 1 or 2, wherein the polyester resin has an acid value of 10 to 40 mgKOH/g, wherein said acid value is measured by a method specified under JIS K0070 in which a sample of said polyester resin is accurately weighed to be 0.2 g and dissolved in 20 ml of chloroform which is then titrated with 0.01 N potassium hydroxide (ethanol solution) to find the acid value and in which phenolphthalein is used as an indicator.

4. The coated metal sheet further covered with the organic resin according to any one of claims 1 to 3, wherein the phenol resin is obtained by alkoxymethylation of methylol groups of a m-cresol-derived phenol resin with n-butanol.

5. The coated metal sheet further covered with the organic resin according to any one of claims 1 to 4, wherein the phenol resin is contained in an amount in a range of 5 to 50 parts by mass per 100 parts by mass of the polyester resin, and the acid catalyst is contained in an amount in a range of 0.1 to 5 parts by mass per 100 parts by mass of the polyester resin.

6. The coated metal sheet further covered with the organic resin according to any one of claims 1 to 5, wherein the coating film is formed from an aqueous coating composition that contains a water-soluble and/or water-dispersible polyester resin, a phenol resin, an acid catalyst and an aqueous medium.

7. The coated metal sheet further covered with the organic resin according to claim 6, wherein the water-soluble and/or water-dispersible polyester resin is a water-soluble and/or water-dispersible polyester resin that is rendered aqueous by neutralizing carboxylic acid groups in molecular chains thereof with a basic compound.

8. The coated metal sheet further covered with the organic resin according to any one of claims 1 to 7, wherein the metal sheet is an aluminum sheet.

9. A can body made from the coated metal sheet further covered with the organic resin of any one of claims 1 to 8.

10. A can lid made from the coated metal sheet further covered with the organic resin of any one of claims 1 to 8.

11. An aqueous coating composition for forming the coating film of the coated metal sheet further covered with the organic resin of any one of claims 1 to 8, wherein the aqueous coating composition contains a water-soluble and/or water-dispersible polyester resin, a phenol resin, an acid catalyst and an aqueous medium.

**Patentansprüche**

1. Beschichtetes Metallblech, ferner bedeckt mit einem organischen Harz, erhalten durch:

Bilden, auf mindestens einer Oberfläche eines Metallblechs, eines Beschichtungsfilms, der ein Polyesterharz mit einer Glasübergangstemperatur von 20 bis 55 °C, ein Phenolharz und einen Säurekatalysator aufweist, wobei die Glasübergangstemperatur mit Verwendung eines Differentialscanningkalorimeters unter der Bedingung einer Temperaturanstiegsrate von 10 °C/min gemessen wird; und

Bilden einer organischen Harzschicht darauf;

wobei als eine Dicarbonsäurekomponente, die das Polyesterharz bildet, eine aromatische Dicarbonsäure und eine aliphatische Dicarbonsäure mit 6 bis 14 Kohlenstoffatomen in einem Molverhältnis von 95:5 bis 80:20 enthalten sind.

2. Beschichtetes Metallblech, weiterhin bedeckt mit dem organischen Harz nach Anspruch 1, wobei die aromatische Dicarbonsäure Terephthalsäure und/oder Isophthalsäure ist und die aliphatische Dicarbonsäure mit 6 bis 14 Kohlenstoffatomen Sebacinsäure ist.

3. Beschichtetes Metallblech, ferner bedeckt mit dem organischen Harz nach Anspruch 1 oder 2, wobei das Polyesterharz einen Säurewert von 10 bis 40 mg KOH/g aufweist, wobei der Säurewert durch ein unter JIS K0070 angegebenes Verfahren gemessen wird, in dem eine Probe des Polyesterharzes wird auf 0,2 g genau gewogen wird und in 20 ml Chloroform gelöst wird, das dann mit 0,01 N Kaliumhydroxid (Ethanollösung) titriert wird, um den Säurewert zu ermitteln und bei dem Phenolphthalein als Indikator verwendet wird.

4. Beschichtetes Metallblech, ferner bedeckt mit dem organischen Harz nach einem der Ansprüche 1 bis 3, wobei das Phenolharz durch Alkoxymethylierung von Methylolgruppen eines von m-Kresol abgeleiteten Phenolharzes mit n-Butanol erhalten wird.

5. Beschichtetes Metallblech, ferner bedeckt mit dem organischen Harz nach einem der Ansprüche 1 bis 4, wobei das Phenolharz in einer Menge in einem Bereich von 5 bis 50 Massenteilen pro 100 Massenteile des Polyesterharzes enthalten ist und der Säurekatalysator in einer Menge in einem Bereich von 0,1 bis 5 Massenteilen pro 100 Massenteile des Polyesterharzes enthalten ist.

6. Beschichtetes Metallblech, ferner bedeckt mit dem organischen Harz nach einem der Ansprüche 1 bis 5, wobei der Beschichtungsfilm aus einer wässrigen Beschichtungszusammensetzung gebildet ist, die ein wasserlösliches und/oder wasserdispergierbares Polyesterharz, ein Phenolharz, einen sauren Katalysator und ein wässriges Medium enthält.

7. Beschichtetes Metallblech, ferner bedeckt mit dem organischen Harz nach Anspruch 6, wobei das wasserlösliche und/oder wasserdispergierbare Polyesterharz ein wasserlösliches und/oder wasserdispergierbares Polyesterharz ist, das durch Neutralisieren von Carbonsäuregruppen in Molekülketten davon mit einer basischen Verbindung wässrig gemacht wird.

8. Beschichtetes Metallblech, ferner bedeckt mit dem organischen Harz nach einem der Ansprüche 1 bis 7, wobei das Metallblech ein Aluminiumblech ist.

9. Dosenkörper hergestellt aus dem beschichteten Metallblech, ferner bedeckt mit dem organischen Harz nach einem der Ansprüche 1 bis 8.

10. Dosendeckel hergestellt aus dem beschichteten Metallblech, ferner bedeckt mit dem organischen Harz nach einem der Ansprüche 1 bis 8.

11. Wässrige Beschichtungszusammensetzung zur Bildung des Beschichtungsfilms des beschichteten Metallblechs, ferner bedeckt mit dem organischen Harz nach einem der Ansprüche 1 bis 8, wobei die wässrige Beschichtungszusammensetzung ein wasserlösliches und/oder wasserdispergierbares Polyesterharz, ein Phenolharz, einen Säurekatalysator und ein wässriges Medium enthält.

**Revendications**

1. Tôle revêtue également couverte de résine organique, obtenue par :

la formation, sur au moins une surface d'une tôle, d'un film de revêtement qui contient une résine de polyester ayant une température de transition vitreuse de 20 à 55°C, une résine phénolique et un catalyseur acide, dans lequel ladite température de transition vitreuse est mesurée en utilisant un analyseur calorimétrique différentiel dans la condition de taux d'élévation de température de 10°C/min ; et

en outre la formation sur celui-ci d'une couche de résine organique ;

dans lequel, en tant que composant d'acide dicarboxylique qui constitue la résine de polyester, sont contenus un acide dicarboxylique aromatique et un acide dicarboxylique aliphatique ayant de 6 à 14 atomes de carbone à un rapport molaire de 95 : 5 à 80 : 20.

2. Tôle revêtue également couverte de résine organique selon la revendication 1, dans lequel l'acide dicarboxylique aromatique est de l'acide téréphtalique et/ou de l'acide isophtalique, et l'acide dicarboxylique aliphatique ayant de 6 à 14 atomes de carbone est de l'acide sébacique.

3. Tôle revêtue également couverte de résine organique selon la revendication 1 ou 2, dans lequel la résine de polyester a un indice d'acide de 10 à 40 mgKOH/g, dans lequel ledit indice d'acide est mesuré par un procédé spécifié dans JIS K0070 dans lequel un échantillon de ladite résine de polyester est pesé avec précision pour être de 0,2 g et dissout dans 20 ml de chloroforme qui est ensuite titré avec 0,01 N d'hydroxyde de potassium (solution d'éthanol) pour découvrir l'indice d'acide et dans lequel phénolphtaléine est utilisé en tant qu'indicateur.

4. Tôle revêtue également couverte de résine organique selon l'une quelconque des revendications 1 à 3, dans lequel la résine phénolique est obtenue par alkoxyméthylation de groupes méthylol d'une résine phénolique, dérivée de m-crésol, avec du n-butanol.

5. Tôle revêtue également couverte de résine organique selon l'une quelconque des revendications 1 à 4, dans lequel la résine phénolique est contenue en une quantité dans une plage de 5 à 50 parties en masse par 100 parties en masse de la résine de polyester, et le catalyseur acide est contenu en une quantité dans une plage de 0,1 à 5 parties en masse par 100 parties en masse de la résine de polyester.

6. Tôle revêtue également couverte de résine organique selon l'une quelconque des revendications 1 à 5, dans lequel le film de revêtement est formé à partir d'une composition de revêtement aqueuse qui contient une résine de polyester hydrosoluble et/ou hydrodispersable, une résine phénolique, un catalyseur acide et un milieu aqueux.

7. Tôle revêtue également couverte de résine organique selon la revendication 6, dans lequel la résine de polyester hydrosoluble et/ou hydrodispersable est une résine de polyester hydrosoluble et/ou hydrodispersable qui est rendue aqueuse en neutralisant des groupes acide carboxylique dans des chaînes moléculaires de ceux-ci avec un composé basique.

8. Tôle revêtue également couverte de résine organique selon l'une quelconque des revendications 1 à 7, dans lequel la tôle est une tôle d'aluminium.

9. Corps de boîte métallique fait de la tôle revêtue également couverte de résine organique de l'une quelconque des revendications 1 à 8.

10. Couvercle de boîte métallique fait de la tôle revêtue également couverte de résine organique de l'une quelconque des revendications 1 à 8.

11. Composition de revêtement aqueuse pour former le film de revêtement de la tôle revêtue également couverte de résine organique de l'une quelconque des revendications 1 à 8, dans lequel la composition de revêtement aqueuse contient une résine de polyester hydrosoluble et/ou hydrodispersable, une résine phénolique, un catalyseur acide et un milieu aqueux.

Fig. 1

4a 3a 2 3b 4b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2013180067 A
- US 2014227529 A
- JP 2006143891 A
- JP 2003246006 A
- JP 2001246695 A
- JP 2007076012 A
- JP H7195618 A
- JP 2005104146 A
- WO 200791740 A